# FASCICULE DE BREVET EUROPEEN

(11) **EP 2 244 940 B1**
(45) Date de publication et mention de la délivrance du brevet: **20.07.2011**
(21) Numéro de dépôt: 09710473.1
(22) Date de dépôt: 02.02.2009
(51) Int. Cl.: B64C 21/10

(54) **PROCÉDÉ DE DÉFORMATION ACTIVE D'UN PROFIL AÉRODYNAMIQUE**
VERFAHREN ZUR AKTIVEN VERFORMUNG EINES AERODYNAMISCHEN PROFILS
METHOD FOR ACTIVELY DEFORMING AN AERODYNAMIC PROFILE

(30) Priorité: 12.02.2008 FR 0800748
(43) Date de publication de la demande: 03.11.2010
(73) Titulaire: THALES, 92200 Neuilly-sur-Seine (FR)
(72) Inventeur: SIMON, Georges-Henri, F-91320 Wissous (FR)
(74) Mandataire: Lucas, Laurent Jacques
(86) Numéro de dépôt international: PCT/EP2009/051158
(87) Numéro de publication internationale: WO 2009/101001

(56) Documents cités:
- US-A- 5 662 294
- US-A1- 2002 125 376
- US-A1- 2005 230 546

## Description

### Domaine technique

La présente invention concerne un procédé de déformation active d'un profil aérodynamique. Ce procédé s'applique par exemple à une déformation d'une voilure d'une aile d'un aéronef en vol, notamment subsonique.

### Problème technique

Dans le domaine de la construction aéronautique il existe une préoccupation constante d'amélioration de l'aérodynamique de l'aéronef et de l'étendu du domaine de vol de l'aéronef. L'amélioration de l'aérodynamique d'un aéronef, et notamment de ses ailes, permet d'améliorer la portance de l'aéronef, limitant ainsi sa consommation d'énergie. Le domaine de vol d'un aéronef est notamment défini par la mécanique de vol de l'aéronef. La mécanique de vol peut être définie par une étude des qualités de vol d'un aéronef, notamment en terme de trajectoire et d'attitude. La mécanique de vol prend notamment en compte une configuration géométrique de l'aéronef, son aérodynamique, sa masse, la position de son centre de gravité et de ses moteurs, et des données dynamiques comme des systèmes d'asservissement et des commandes de vol de l'aéronef. L'étude de l'aérodynamique et de la mécanique de vol est aussi nommée aéromécanique.

De manière générale, la portance d'une aile est dégradée du fait de la naissance d'un écoulement turbulent de l'air sur une partie de l'extrado de l'aile. Des points de transitions peuvent être définis entre un écoulement laminaire de filets d'air sur l'aile et un écoulement turbulent de ces filets d'air. Les points de transitions sont donc des points de décollement des filets d'air sur l'aile. La position des points de décollement est notamment liée au profil de l'aile ainsi qu'à l'angle d'incidence de l'aile par rapport aux filets d'air. Un effet de turbulence sur une grande partie d'un extrado d'une aile a notamment pour conséquence une perte de portance et un accroissement de la traînée de l'aile, ce qui entraîne une surconsommation en carburant de l'aéronef.

Un objectif recherché par les constructeurs d'aéronef et en particulier les constructeurs de voilure d'aéronef est de diminuer au maximum les effets de turbulence sur l'aile pour une grande partie du domaine de vol de l'aéronef. Une diminution des effets de turbulence peut être obtenue en éloignant au maximum le décrochement des filets d'air du bord d'attaque de l'aile.

### Exposé de l'art antérieur

De manière classique, chaque profil d'aile, avant d'être construit, fait l'objet de simulations et d'essais en soufflerie pour vérifier que ses qualités aéromécaniques sont conformes à celles attendues. Les profils d'aile sont définis de façon à assurer une portance maximum de l'aile avec une traînée minimum, pour les différentes phases de vol qui sont :
- le vol de croisière ;
- le vol en basses vitesses ;
- le décollage ;
- l'atterrissage.

Les profils d'ailes sont également définis en fonction du type d'aéronef et de son utilisation prévue.

Les profils d'aile ainsi définis représentent un compromis entre différents contraintes propres à chaque phase de vol. Les profils présentent donc des effets laminaires durant certaines phases de vol selon les compromis choisis. Une fois les profils d'aile définis, ils ne sont plus modifiables.

Une solution peut être de modifier la courbure de l'extrado de l'aile pour absorber les turbulences au cours des différentes phases du vol :
- en éloignant du bord d'attaque les points de transition entre l'écoulement laminaire des filets d'air sur l'aile et l'écoulement turbulent des filets d'air sur l'aile ;
- en plaquant les filets d'air sur l'extrado de l'aile.

Une modification de la courbure de l'extrado de l'aile peut être obtenue en déformant la structure externe de l'extrado de l'aile sous la contrainte d'actionneurs. Une solution connue de l'art antérieur consiste :
- à mesurer à l'aide de capteurs à base de fibre optique la position des points de transition, puis
- à modifier la structure externe de l'extrado grâce à des actionneurs piézoélectriques.

Cette solution présente de nombreux inconvénients. Parmi ses inconvénients, les actionneurs piézoélectriques ont un comportement fortement dégradé à basse température, notamment en dessous de zéros degrés. Or lors d'un vol, les ailes d'un aéronef sont soumises à des températures qui peuvent aller jusqu'à moins cinquante degrés. Une telle solution ne peut donc être mise en oeuvre sur des aéronefs volant à une altitude ou la température est en dessous de zéros degrés. Les actionneurs piézoélectriques ont également un mauvais rapport densité de travail sur temps de réponse. La densité de travail représente la capacité des actionneurs à déformer une surface en fonction de l'allongement des actionneurs et des propriétés de la surface. Il est donc nécessaire d'avoir un grand nombre d'actionneurs pour déformer une surface d'aile. D'une part les actionneurs piézoélectriques sont coûteux et d'autre part, multiplier le nombre d'actionneurs sur une aile alourdi cette dernière, augmentant ainsi la consommation en énergie de l'aéronef.

Une déformation de la structure externe peut également être obtenue par effet Joule. Une telle structure externe peut être réalisée dans un matériau composite, dit à mémoire de forme, apte à se déformer en présence d'un courant et à reprendre sa forme initiale après cessation de la stimulation électrique. Par exemple, on peut utiliser une couche de fibre de verre renforcée insérée entre deux couches de Nitinol. Ensuite un réseau de câble en Nichrome permet de véhiculer un courant à l'intérieur du matériaux composite. Cette technique possède l'inconvénient d'être coûteuse à mettre en oeuvre et nécessite une forte puissance électrique pour exercer la déformation du matériau composite. De plus un nombre de cycles important est nécessaire pour le retour du matériau à sa forme initiale.

Une autre solution existante propose pour plaquer les filets d'air sur l'extrado de l'aile une utilisation d'orifices produisant des dépressions d'air capables d'interagir sur les écoulement d'air sur l'extrado de l'aile. Cette méthode améliore peu en réalité, l'aérodynamisme de l'aile. En effet, les orifices utilisés ont une faible section de l'ordre du millimètre, ce qui implique qu'ils sont facilement bouchés par des poussières. Leur nettoyage est, par ailleurs, très difficile. De plus la mise en oeuvre de cette solution nécessite un dispositif complexe de tuyauterie capillaire à l'intérieur de l'aile alourdissant celle-ci en plus d'être complexe à mettre en oeuvre.

Le document US 2005/230546 propose une autre solution existante.

### Résumé de l'invention

Un but de l'invention est notamment de pallier les inconvénients précités. A cet effet, l'invention a pour objet un procédé de déformation active par asservissement d'un profil aérodynamique. Le profil aérodynamique comporte notamment un matériau élastique. Le matériau élastique peut être appliqué sur une partie de la surface du profil aérodynamique. Le matériau, élastique est notamment en contact avec un écoulement fluide. Le matériau élastique est déformable par un ou plusieurs actionneurs à mémoire de forme, placés en contact avec le matériau élastique. Les actionneurs peuvent être commandés par un calculateur relié à des capteurs.

Le procédé de déformation peut comporter au moins les étapes suivantes :
- mesures de variables physiques de condition d'écoulement du fluide par les capteurs ;
- transmissions des variables physiques de condition d'écoulement mesurées au calculateur ;
- détection de points de transitions éventuels entre un écoulement laminaire et un écoulement turbulent du fluide sur le matériau élastique en fonction des variables physiques de conditions d'écoulement mesurées ;
- calcul d'une déformation à appliquer sur le matériaux élastique en fonction de positions des points de transitions détectés ;
- calcul d'une ou plusieurs consignes à appliquer par un ou plusieurs actionneurs pour obtenir la déformation à appliquer sur le matériaux élastique ;
- transmission de la consigne calculée aux actionneurs ;
- déformation du matériau élastique par les actionneurs ;
- mesure de la déformation effective du matériau élastique ;
- calcul d'une nouvelle consigne à appliquer par un ou plusieurs actionneurs en fonction de la déformation effective du matériau élastique.

La détection de points de transitions peut notamment comporter :
- un premier calcul du coefficient de viscosité du fluide ;
- un deuxième calcul du nombre de Reynolds caractéristique de l'écoulement du fluide sur le matériau élastique ;
- un troisième calcul des positions des éventuels points de transition prenant notamment en compte le nombre de Reynolds, le coefficient de viscosité du fluide, un angle d'incidence du profil dans le fluide par rapport à un plan horizontal, une vitesse d'écoulement du fluide, des données de calcul de dynamique de fluide provenant d'une base de données.

Le troisième calcul des positions des points de transition peut prendre en compte des coefficients de pression de capteurs à base de fibres optiques placées sur la surface du matériau élastique.

Le troisième calcul des positions des points de transition peut prendre en compte des coefficients de pression de capteurs à base de fibres optiques placées dans le matériau élastique.

Les coefficients de pression sont notamment des coefficients relatifs à un coefficient de pression et de température de référence, par exemple mesuré par une fibre optique de référence placée sous le matériau élastique.

Le calcul d'une déformation à appliquer peut prendre en compte la forme du profil, les caractéristiques physiques du matériau élastique.

Le calcul des consignes peut prendre en compte les caractéristiques mécaniques des actionneurs, les caractéristiques physiques du matériau élastique.

Le procédé de déformation peut s'appliquer à la déformation d'un matériau élastique apte à reprendre sa forme initiale après déformation.

Le procédé de déformation peut mettre en oeuvre des actionneurs réalisés dans un alliage à mémoire de formes.

Le procédé de déformation peut mettre en oeuvre des actionneurs répartis sur une ou plusieurs lignes d'actionneurs. Les lignes d'actionneurs peuvent être réparties sous le matériau élastique.

Le procédé de déformation peut s'appliquer à un profil aérodynamique en contact avec l'air.

Le procédé de déformation peut s'appliquer à un profil d'aile d'un aéronef.

Le procédé de déformation peut mettre en oeuvre des actionneurs répartis sur des lignes d'actionneurs sensiblement parallèles à un bord d'attaque du profil d'aile.

Le calcul du nombre de Reynolds prend notamment en compte la vitesse d'écoulement du fluide, l'altitude de l'aéronef, le coefficient de viscosité du fluide.

La vitesse d'écoulement du fluide, peut provenir d'un anémomètre situé sur l'aéronef.

L'altitude peut provenir d'un altimètre situé sur l'aéronef.

La température peut provenir d'une sonde de température située sur l'aéronef.

L'angle d'incidence peut provenir d'une sonde d'incidence située sur l'aéronef.

Le procédé de déformation peut s'appliquer à des pales d'une éolienne.

Le procédé de déformation peut s'appliquer à un profil aérodynamique immergé dans l'eau.

Le procédé de déformation peut s'appliquer à des pales d'une turbine.

Le procédé de déformation peut s'appliquer à une surface aérodynamique d'un navire.

Le procédé de déformation peut s'appliquer à une surface aérodynamique d'un sous-marin.

Le procédé de déformation peut s'appliquer à la déformation d'une peau souple composée de carbone Kevlar, marque déposée par la société Dupont de Nemours.

### Autres avantages de l'invention

L'invention a notamment pour principaux avantages de permettre une diminution de la consommation en carburant de l'aéronef et d'améliorer la sécurité du vol.

### Brève description des figures

D'autres caractéristiques et avantages de l'invention apparaîtront à l'aide de la description qui suit, donnée à titre illustratif et non limitatif, et faite en regard des dessins annexés qui représentent :
- la figure 1 : un schéma d'une mise en oeuvre de l'invention ;
- la figure 2 : un schéma d'une aile déformable utilisée pour la mise en oeuvre de l'invention ;
- la figure 3 : un schéma de principe général du procédé de déformation selon l'invention ;
- la figure 4 : un schéma des différentes étapes du procédé de déformation selon l'invention.

### Description de l'invention (au moyen d'un exemple de réalisation)

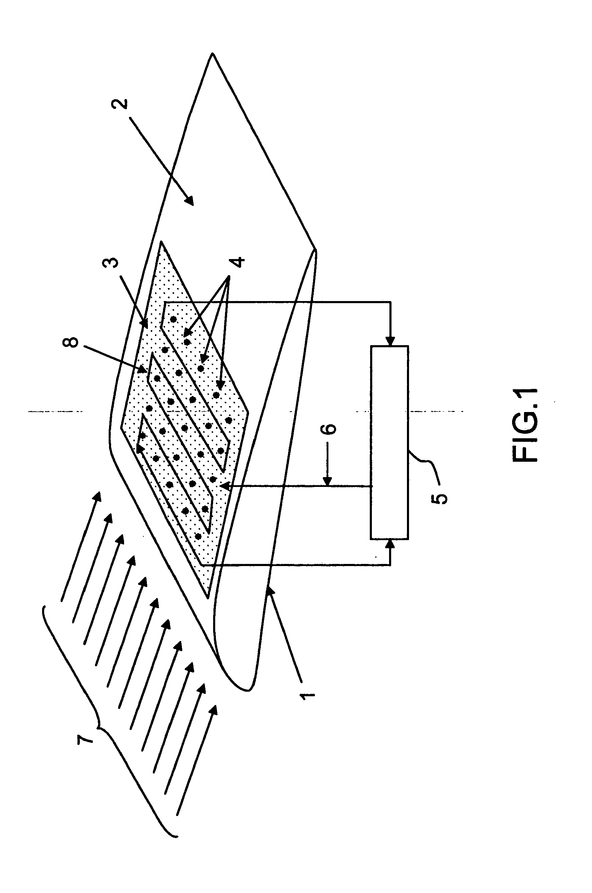

La figure 1 représente de manière schématique un exemple de mise en oeuvre du procédé de déformation d'un profil aérodynamique selon l'invention.

Le profil aérodynamique peut être par exemple une aile 1 d'aéronef placée dans un flux d'air attaquant le bord d'attaque de l'aile 1. Le flux d'air est représenté sur la figure 1 par des filets d'air 7. Le mode de réalisation de l'invention, décrit par la suite, est appliqué à une aile d'avion mais il pourrait s'appliquer à d'autres parties de l'avion comme le fuselage ou bien être appliqué sur une partie d'une coque de bateau ou de sous-marin par exemple. D'autres profils aérodynamiques peuvent également utiliser le procédé de déformation du profil aérodynamique comme des pales d'éoliennes.

Pour pouvoir déformer l'extrado 2 de l'aile 1, une peau souple 3 est plaquée contre une partie la structure de l'extrado 2 de l'aile 1. La peau souple 3 est une surface avec une propriété élastique apte à se déformer et à reprendre sa forme initiale. Une peau souple peut être réalisée avec des matériaux à mémoire de forme. La peau souple 3 peut être réalisée par exemple avec des matériaux composites de type carbone Kevlar, marque déposée par la société Dupont de Nemours, avec une hystérésis très réduite.

Sous la peau souple 3 peuvent être placés des actionneurs 4 de très petite taille, à mémoire de forme, permettant de déformer la peau souple 3. Les mini-actionneurs à mémoire de forme 4 peuvent être de type Shape Memory Alloys, c'est à dire des alliages à mémoire de forme. Les actionneurs 4 peuvent être commandés par un calculateur 5. Le calculateur 5 calcule notamment une commande 6 à appliquer à chaque actionneur 4 pour déformer la peau souple 3 afin de modifier l'écoulement des filets d'air 7 sur la surface de la peau souple 3. Le calculateur 5 calcule une déformation de la peau nécessaire à la modification de l'écoulement des filets d'air 7. Une commande 6 à appliquer est donc calculée en fonction de la déformation souhaitée. Le calcul de la déformation à appliquer sur la peau souple 3 prend en compte plusieurs paramètres. Parmi ces paramètres, se trouvent les positions des points de transitions entre un écoulement laminaire sur l'extrado 2 de l'aile 1 et un écoulement turbulent. Les positions des points de transition sont calculées en fonction d'une ou plusieurs mesures effectuées par des capteurs 8 répartis sur ou dans la peau souple 3. Les capteurs 8 peuvent par exemple être collés sur la peau souple. Dans un autre mode de réalisation les capteurs 8 peuvent être intégrés dans la structure de la peau souple 3. La peau souple 3 peut elle-même être intégrée dans la structure de l'aile 1. Les capteurs 8 peuvent être réalisés par une fibre optique 8. La fibre optique 8 peut être, par exemple, une fibre optique mono-mode. La déformation de la fibre optique provoquée par la présence de points de transition peut être mesurée par une méthode d'interférométrie. Dans un autre mode de réalisation, la fibre optique 8 peut être une fibre optique à réseau de Bragg. Une fibre optique amplifiée multi-mode peut également être utilisée. Les déformations de la fibre optique 8 permettent donc de calculer les positions des points de transitions. Ensuite, en fonction notamment du profil de l'aile 1, la déformation à appliquer sur la peau souple 3 est calculée. Les fibres optiques 8 permettent, en effet, de détecter un faible bruit sur la peau souple 3 et donc de détecter une turbulence dans l'écoulement des filets d'air sur la peau souple 3.

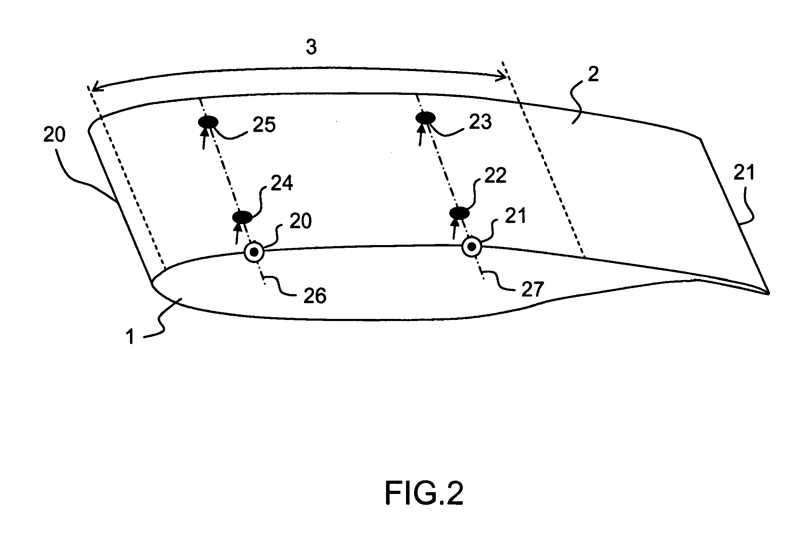

La figure 2 représente un exemple d'implantation des actionneurs 4, représentés sur la figure 1, sur une aile 1 d'un aéronef. Une peau souple 3 recouvre une partie de la surface externe de l'extrado 2 de l'aile 1. La peau souple 3 est située entre le bord d'attaque 20 et le bord de fuite 21 de l'aile 1. La peau souple 3 peut par exemple s'étendre entre 1 % et 65% de la corde de l'aile 1 en partant du bord d'attaque 20. La peau souple 3 peut être déformée en plusieurs points par plusieurs actionneurs 22, 23, 24, 25. Les actionneurs 22, 23, 24, 25 peuvent être répartis sous la peau souple 3 selon une ou plusieurs lignes d'actionneurs 26, 27. Sur la figure 2, par exemple, deux lignes 26, 27 d'actionneurs sont représentées. Les lignes d'actionneurs 26, 27 sont sensiblement parallèles au bord d'attaque 20 de l'aile 1. Les lignes d'actionneurs 26, 27 se situent par exemple sur la figure 2, respectivement à 20% et 40% environ du bord d'attaque 20 sur la corde de l'aile 1. Sur la figure 2, donnée à titre d'exemple, les actionneurs 22, 23, 24, 25 sont répartis par deux sur les lignes d'actionneurs 26, 27. Les actionneurs 22, 23, 24, 25 déforment la peau souple 3 par une pression exercée de manière sensiblement vertical de l'intérieur de l'aile 1 vers l'extérieur de l'aile 1. Sur chaque ligne d'actionneurs 26, 27 on peut placer, sur des points de contrôle 20, 21, des capteurs de déformations de la peau souple 3. Les capteurs de déformation de la peau souple 3 sont chargés de mesurer la déformation effective de la peau souple 3 à la suite d'une sollicitation de la peau souple 3 par les actionneurs 22, 23, 24, 25. La déformation effective de la peau souple 3 dépend notamment de la force appliquée mais également de la résistance de la peau souple 3.

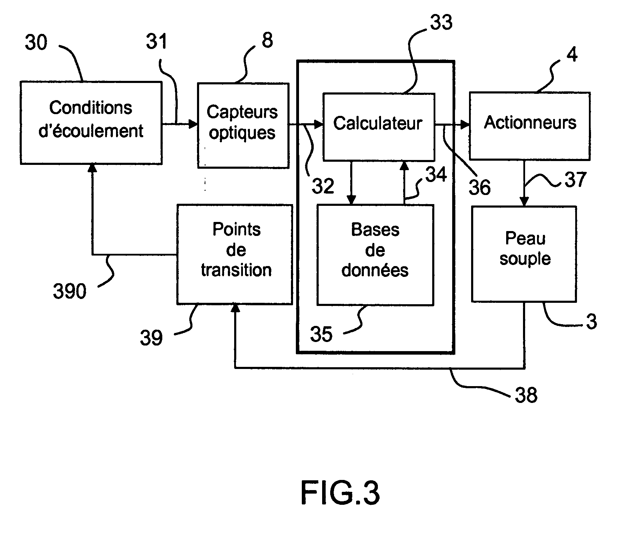

La figure 3 représente de manière schématique le procédé de déformation d'un profil aérodynamique selon l'invention mis en oeuvre pour une aile d'un aéronef.

Les conditions d'écoulement des filets d'air 7 représentés sur la figure 1 peuvent être mesurées notamment par les capteurs optiques 8, afin de déterminer les positions des points de transition entre un écoulement laminaire et un écoulement turbulent des filets d'air 7. La mesure 31 de variables de conditions d'écoulement peut être une première étape 31 du procédé selon l'invention. Les mesures effectuées notamment par les capteurs optiques 8 sont ensuite transmises au cours d'une deuxième étape 32 à un calculateur 33. Le calculateur 33, en liaison 34 avec des bases de données 35, calcule notamment des consignes 36 à appliquer par le ou les actionneurs 4, 22, 23, 24, 25. Les actionneurs 4 exercent donc une ou plusieurs pressions 37 sur la peau souple 3. La peau souple 3 se déforme sous les pressions 37. La déformation de la peau souple 3 entraîne une modification 38 des positions des points de transition 39. La modification 38 des positions des points de transition 39 entraîne une modification 390 des conditions d'écoulements 30. La modification 390 des conditions d'écoulement 30 est détectée par les capteurs optiques 8 et transmise au calculateur 33 qui peut éventuellement corriger la ou les pressions exercées 37 par le ou les actionneurs 4. Toute modification d'écoulement des filets d'air 7 peut donc entraîner une modification des pressions exercées 37 par les différents actionneurs 4 sur la peau souple 3, ceci afin d'éloigner le plus possible du bord d'attaque de l'aile 1 les points de transition 39.

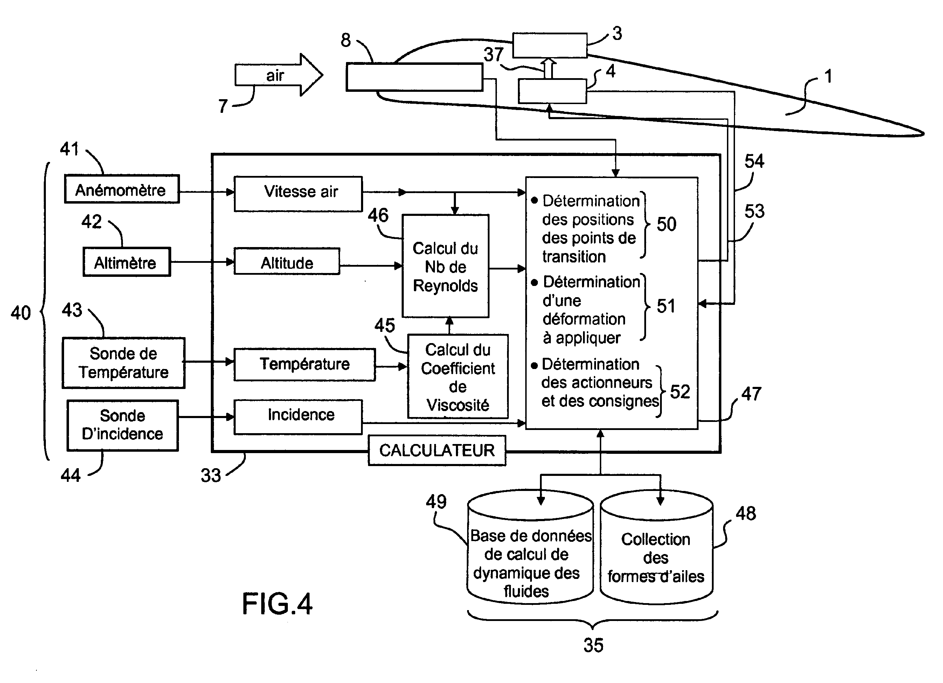

La figure 4 représente de manière schématique les différents traitements effectués par le calculateur 5, 33, représenté sur les figures 1, 3. Le calculateur 33 prend en compte différent paramètres physiques dont les valeurs proviennent notamment de capteurs 40 situées sur l'aéronef. Parmi les capteurs 40 de l'aéronef :
- un anémomètre 41 fournit une valeur de la vitesse de l'air ;
- un altimètre 42 fournit une valeur de l'altitude, permettant au calculateur 33 de calculer la masse volumique de l'air ;
- une sonde de température 43 fournit une valeur de la température ambiante ;
- une sonde d'incidence 44, placée par exemple sur l'aile 1, fournit une valeur de l'incidence de l'aile 1 par rapport à un plan horizontal.

Un premier calcul 45 d'un coefficient de viscosité de l'air est effectué par le calculateur 33. Le premier calcul 45 prend en compte notamment la température mesurée par la sonde de température 43.

Un deuxième calcul 46 permet de déterminer le nombre de Reynolds caractéristique de l'écoulement de l'air et intervenant dans les équations de dynamique des fluides. Le nombre de Reynolds est calculé en fonction notamment de la vitesse de l'air mesurée par l'anémomètre 41, de l'altitude mesurée par l'altimètre 42 et du coefficient de viscosité calculé au cours du premier calcul 45.

Un troisième calcul 47 effectué par le calculateur 33 est le calcul des consignes de déformation à appliquer par les actionneurs 4. Le calcul des déformations prend notamment en compte les paramètres physiques suivants :
- la vitesse de l'air mesurée par l'anémomètre 41 ;
- le nombre de Reynolds résultat du deuxième calcul 46 ;
- l'incidence mesurée par la sonde d'incidence 44 ;
- des coefficients de pression issus des capteurs optiques 8 situés sur ou dans la peau souple 3 ;
- des données issues des différentes bases de données 35.

Les coefficients de pression issus des capteurs optiques 8 sont des coefficients relatifs à un coefficient de pression et de température de référence, le coefficient de pression de référence étant mesuré sur une fibre optique de référence. Une fibre optique de référence, placée sous la peau souple, est nécessaire pour prendre en compte la sensibilité des fibres optiques aux différences de température et ainsi réduire l'erreur commise sur le coefficient de pression mesuré par les capteurs optiques 8. Le coefficient de pression mesuré sur la fibre de référence dépend donc de la température statique. La température statique est la température ambiante mesurée à l'abri du vent relatif.

Différentes bases de données 35 peuvent être reliés au calculateur 33. Une première base de données 49 peut comporter une collection des formes de l'aile 1. La collection des formes d'aile définit le profil de l'aile par un maillage de la surface de l'aile 1. Une deuxième base de données, non représentée sur la figure 4, peut comporter les caractéristiques physiques, mécaniques ainsi que la position sur l'aile 1 des actionneurs 4, 22, 23, 24. Une troisième base de données, non représentée sur la figure 4, peut également comporter les caractéristiques physiques et mécanique de la peau souple 3.

Une quatrième base de données 49 peut être une base de données de calcul de dynamique des fluides. La quatrième base de données 49 peut comporter une librairie de calcul de la dynamique des fluides permettant au calculateur 33 de résoudre les équations d'écoulement des fluides afin de déterminer notamment les positions des éventuels points de transition 39.

Le troisième calcul 47 comporte notamment les étapes suivantes :

Une première étape de calcul 50 peut être une détermination de la présence de points de transition suivie d'un calcul des positions des éventuels points de transition sur l'aile 1. Si aucun point de transition n'est déterminé par la première étape de calcul 50, aucune consigne 36 n'est adressée aux actionneurs. Une détection de points de transition peut éventuellement être faîte de manière cyclique afin de déterminer une formation d'un écoulement turbulent sur l'extrado de l'aile 1. La détection des points de transition ainsi que la détermination de leur position prend notamment en compte les coefficients de pression issus des capteurs optiques 8, ainsi que le nombre de Reynolds et le coefficient de viscosité de l'air. La première étape de calcul 50 utilise notamment les données de la base de données de calculs de dynamique des fluides 49.

Une deuxième étape de calcul 51 peut être une détermination d'une déformation à appliquer sur la peau souple 3 pour modifier la position des points de transition 39 afin de les éloigner du bord d'attaque 20 de l'aile 1. La détermination de la déformation à appliquer pour modifier la position des points de transition prend notamment en compte les caractéristiques physiques et mécaniques de la peau souple 3, les formes de l'aile 1, le nombre de Reynolds 46, le coefficient de viscosité 45, ainsi que les données de la base de données de calculs de dynamique des fluides 49.

Une troisième étape de calcul 52 vise ensuite à déterminer les actionneurs 4, 22, 23, 24, 25 pouvant être mis en oeuvre pour effectuer la déformation calculée au cours de la deuxième étape de calcul 51. La détermination des actionneurs 4, 22, 23, 24, 25 à mettre en oeuvre peut être effectuée en prenant en compte les positions des différents actionneurs 4, 22, 23, 24, 25 sur l'aile, les caractéristiques physiques des actionneurs 4, ainsi que les caractéristiques physiques et mécaniques de la peau souple 3. Ceci permet en outre de déterminer une pression 37 à exercer par chaque actionneur 4 sélectionné sur la peau souple 3. Une fois les actionneurs déterminés ainsi que les forces de pression à exercer, une consigne de pression 53 peut être envoyée à chaque actionneur 4 sélectionné. Chaque actionneur 4 recevant une consigne de pression 53 l'applique, produisant ainsi une déformation de la peau externe 3. Ensuite les actionneurs ayant reçus la consigne de pression 53 peuvent envoyer en réponse au calculateur 33 une valeur du déplacement qu'ils ont effectué 54, permettant par exemple au calculateur 33 d'effectuer une correction de la consigne de pression 53, si la déformation de la peau souple 3 attendue ne s'est pas produite. Des capteurs de déformations de la peau souple 3 peuvent également transmettre au calculateur des informations sur la déformation réelle de la peau souple, afin de modifier la consigne de pression 53 si le résultat de déformation obtenu n'est pas celui escompté. Le procédé selon l'invention comporte ainsi un asservissement permettant d'améliorer ses performances.

Avantageusement les temps de réponses des différents capteurs 41, 42, 43, 44, combinés avec les temps de calcul, les temps de réaction des actionneurs 4 et le temps de réponse de la peau souple 3, permettent d'avoir un temps de réaction à un écoulement turbulent suffisamment faible, de l'ordre de 5 millisecondes, pour pouvoir être utilisé au cours du vol afin de déformer le profil de l'aile 1.

### Avantages

Le procédé selon l'invention permet avantageusement de modifier un profil d'une aile 1 au cours du vol. Ceci permet donc de diminuer les vitesses de décrochage d'un aéronef, permettant d'augmenter ainsi le niveau de sécurité aux basses vitesses de vol. Ceci permet de plus un élargissement du domaine de vol de l'aéronef qui peut évoluer avec des angles d'incidence plus important que ceux usuels.

Le procédé selon l'invention permet également une réduction de la traînée de l'aéronef en améliorant son aérodynamisme. Une réduction de la traînée d'un aéronef permet une réduction de sa consommation en énergie.

### Variantes de réalisation

Le procédé selon l'invention peut avantageusement s'appliquer de manière générale à tout type de surface aérodynamique en mouvement relatif par rapport à un fluide. Notamment le procédé peut être appliqué à des mobiles comme des véhicules ou des navires ou encore des sous-marins. Le procédé selon l'invention permet en effet d'améliorer la traînée d'un profil aérodynamique en mouvement relatif par rapport à un fluide.

Le procédé selon l'invention peut avantageusement s'appliquer à un profil de pale pour des éoliennes ou encore pour des pales de turbines d'usines hydrauliques, ou des pales d'aéronefs par exemple.

Le procédé selon l'invention permet avantageusement d'augmenter la traînée des pales lors du fonctionnement de celles-ci afin de produire le maximum de rendement énergétique. La traînée peut être augmentée en modifiant le profil des pales. Une modification de l'écoulement turbulent s'obtient de la même manière, que décrite précédemment, en modifiant les positions des points de transitions. Le procédé peut également permettre de réduire la traînée des pales lorsque celles-ci sont au repos, c'est à dire non utilisées, afin d'éviter une rotation inopportune pouvant les endommager. La réduction de la traînée des pales peut être obtenue, telle que décrite précédemment, par une modification des positions des points de transitions entre les écoulements turbulents et laminaires sur les pales.

## Revendications

1. Procédé de déformation active par asservissement d'un profil aérodynamique (1) comportant un matériau élastique (3), appliqué sur une partie de la surface du profil aérodynamique, ledit matériau élastique étant en contact avec un écoulement fluide (7) ; ledit matériau élastique étant déformable par un ou plusieurs actionneurs à mémoire de forme (4), placés en contact avec le matériau élastique, lesdits actionneurs étant commandés par un calculateur (5) relié à des capteurs (8),
**caractérisé en ce qu'**il comporte au moins les étapes suivantes:
• mesures de variables physiques de condition d'écoulement du fluide par les capteurs (8) ;
• transmissions des variables physiques de condition d'écoulement mesurées au calculateur (5) ;
• détection de points de transitions (39) éventuels entre un écoulement laminaire et un écoulement turbulent du fluide sur le matériau élastique en fonction des variables physiques de conditions d'écoulement mesurées ;
• calcul d'une déformation à appliquer sur le matériaux élastique en fonction de positions des points de transitions détectés ;
• calcul d'une ou plusieurs consignes à appliquer par un ou plusieurs actionneurs pour obtenir la déformation à appliquer sur le matériaux élastique ;
• transmission de la consigne calculée aux actionneurs ;
• déformation du matériau élastique par les actionneurs ;
• mesure de la déformation effective du matériau élastique ;
• calcul d'une nouvelle consigne à appliquer par un ou plusieurs actionneurs en fonction de la déformation effective du matériau élastique.

2. Procédé de déformation selon la revendication 1, **caractérisé en ce que** la détection de points de transitions (39) comporte :
• un premier calcul (45) du coefficient de viscosité du fluide ;
• un deuxième calcul (46) du nombre de Reynolds caractéristique de l'écoulement du fluide sur le matériau élastique ;
• un troisième calcul (47) des positions des éventuels points de transition prenant en compte le nombre de Reynolds, le coefficient de viscosité du fluide, un angle d'incidence du profil dans le fluide par rapport à un plan horizontal, une vitesse d'écoulement du fluide, des données de calcul de dynamique de fluide provenant d'une base de données.

3. Procédé de déformation selon la revendication 2, **caractérisé en ce que** le troisième calcul des positions des points de transition (39) prend en compte des coefficients de pression de capteurs (8) à base de fibres optiques placées sur la surface du matériau élastique (3).

4. Procédé de déformation selon la revendication 2, **caractérisé en ce que** le troisième calcul des positions des points de transition prend en compte des coefficients de pression de capteurs à base de fibres optiques placées dans le matériau élastique.

5. Procédé de déformation selon l'une quelconque des revendications 3 et 4, **caractérisé en ce que** les coefficients de pression sont des coefficients relatifs à un coefficient de pression et de température de référence, mesuré par une fibre optique de référence placée sous le matériau élastique.

6. Procédé de déformation selon l'une quelconque des revendications précédentes, **caractérisé en ce que** le calcul d'une déformation à appliquer prend en compte la forme du profil, les caractéristiques physiques du matériau élastique.

7. Procédé de déformation selon l'une quelconque des revendications précédentes, **caractérisé en ce que** le calcul des consignes prend en comptes les caractéristiques mécaniques des actionneurs, les caractéristiques physiques du matériau élastique.

8. Procédé de déformation selon l'une quelconque des revendications précédentes, **caractérisé en ce qu'**il s'applique à la déformation d'un matériau élastique apte à reprendre sa forme initiale après déformation.

9. Procédé de déformation selon l'une quelconque des revendications précédentes, **caractérisé en ce qu'**il met en oeuvre des actionneurs réalisés dans un alliage à mémoire de formes.

10. Procédé de déformation selon l'une quelconque des revendications précédentes, **caractérisé en ce qu'**il met en oeuvre des actionneurs (4, 22, 23, 24, 25) répartis sur une ou plusieurs lignes d'actionneurs, lesdites lignes d'actionneurs étant réparties sous le matériau élastique.

11. Procédé de déformation selon l'une quelconque des revendications précédentes, **caractérisé en ce qu'**il s'applique à un profil aérodynamique en contact avec l'air.

12. Procédé de déformation selon l'une quelconque des revendications précédentes, **caractérisé en ce qu'**il s'applique à un profil d'aile d'un aéronef (1).

13. Procédé de déformation selon la revendication précédente, **caractérisé en ce qu'**il met en oeuvre des actionneurs (4, 22, 23, 24, 25)répartis sur des lignes d'actionneurs sensiblement parallèles à un bord d'attaque du profil d'aile.

14. Procédé de déformation selon l'une quelconque des revendications 12 et 13, **caractérisé en ce que** le calcul du nombre de Reynolds prend en compte la vitesse d'écoulement du fluide, l'altitude de l'aéronef, le coefficient de viscosité du fluide.

15. Procédé de déformation selon l'une quelconque des revendications 12 à 14, **caractérisé en ce que** :
• la vitesse d'écoulement du fluide, provient d'un anémomètre (41) situé sur l'aéronef ;
• l'altitude provient d'un altimètre situé sur l'aéronef ;
• la température provient d'une sonde de température située sur l'aéronef ;
• l'angle d'incidence provient d'une sonde d'incidence (44) située sur l'aéronef.

16. Procédé de déformation selon l'une quelconque des revendications 1 à 11, **caractérisé en ce qu'**il s'applique à des pales d'une éolienne.

17. Procédé de déformation selon l'une quelconque des revendications 1 à 10, **caractérisé en ce qu'**il s'applique à un profil aérodynamique immergé dans l'eau.

18. Procédé de déformation selon l'une quelconque des revendications 1 à 11, 17, **caractérisé en ce qu'**il s'applique à des pales d'une turbine.

19. Procédé de déformation selon l'une quelconque des revendications 1 à 11, 17, **caractérisé en ce qu'**il s'applique à un profil aérodynamique d'un navire.

20. Procédé de déformation selon l'une quelconque des revendications 1 à 10, **caractérisé en ce qu'**il s'applique à un profil aérodynamique d'un sous-marin.

21. Procédé de déformation selon l'une quelconque des revendications précédentes, **caractérisé en ce qu'**il s'applique à la déformation d'une peau souple composée de carbone Kevlar, marque déposée par la société Dupont de Nemours.

## Claims

1. A process for actively deforming, by feedback control, an aerodynamic profile (1), comprising an elastic material (3) applied to part of the surface of said aerodynamic profile, said elastic material being in contact with a fluid flow (7), said elastic material being designed to be deformed by one or more shape memory actuator (4) placed in contact with the plastic material, said actuators being controlled by a computer (5) connected to sensors (8),
**characterised in that** it comprises at least the following steps:
• measuring the physical variables of the fluid flow condition using the sensors (8);
• transmitting the physical variables of the measured flow condition to the computer (5);
• detecting possible transition points (39) between a laminar flow and a turbulent flow of the fluid on the elastic material as a function of the physical variables of the measured flow conditions;
• calculating a deformation to be applied to the elastic material as a function of the positions of the detected transition points;
• calculating one or more set points to be applied by one or more actuators so as to obtain the deformation to be applied to the elastic material;
• transmitting the calculated set point to the actuators;
• deforming the elastic material using the actuators;
• measuring the effective deformation of the elastic material;
• calculating a new set point to be applied by one or more actuators as a function of the effective deformation of the elastic material.

2. The deforming process according to claim 1, **characterised in that** the detection of transition points (39) comprises:
• a first calculation (45) of the viscosity coefficient of the fluid;
• a second calculation (46) of the Reynolds number characteristic of the fluid flow over the elastic material;
• a third calculation (47) of the positions of the possible transition points taking into account the Reynolds number, the viscosity coefficient of the fluid, an angle of incidence of the profile in the fluid in relation to a horizontal plane, a flow speed of the fluid, dynamic calculation data of the fluid provided by a database.

3. The deforming process according to claim 2, **characterised in that** the third calculation of the positions of the transition points (39) takes into account the pressure coefficients of fibre-optic-based sensors (8) placed on the surface of the elastic material (3).

4. The deforming process according to claim 2, **characterised in that** the third calculation of the positions of the transition points takes into account the pressure coefficients of the fibre-optic-based sensors placed on the elastic material.

5. The deforming process according to any one of claims 3 to 4, **characterised in that** the pressure coefficients are coefficients relating to a pressure and a reference temperature coefficient, measured by a reference fibre-optic placed underneath the elastic material.

6. The deforming process according to any one of the preceding claims, **characterised in that** the calculation of a deformation to be applied takes into account the shape of the profile and the physical characteristics of the elastic material.

7. The deforming process according to any one of the preceding claims, **characterised in that** the calculation of the set points takes into account the mechanical characteristics of the actuators and the physical characteristics of the elastic material.

8. The deforming process according to any one of the preceding claims, **characterised in that** it is applied to the deformation of an elastic material designed to resume its initial shape following deformation.

9. The deforming process according to any one of the preceding claims, **characterised in that** it implements actuators made from a shape memory alloy.

10. The deforming process according to any one of the preceding claims, **characterised in that** it implements actuators (4, 22, 23, 24, 25) distributed over one or more actuator rows, said actuator rows being distributed underneath the elastic material.

11. The deforming process according to any one of the preceding claims, **characterised in that** it is applicable to an aerodynamic profile in contact with air.

12. The deforming process according to any one of the preceding claims, **characterised in that** it is applicable to a wing profile of an aircraft (1).

13. The deforming process according to the preceding claim, **characterised in that** it implements actuators (4, 22, 23, 24, 25) distributed over actuator rows which are essentially parallel to a leading edge of said wing profile.

14. The deforming process according to any one of claims 12 and 13, **characterised in that** the calculation of the Reynolds number takes into account the flow speed of the fluid, the altitude of the aircraft and the viscosity coefficient of the fluid.

15. The deforming process according to any one of claims 12 to 14, **characterised in that**:
• the flow speed of the fluid is provided by an air speed indicator (41) located on the aircraft;
• the altitude is provided by an altimeter located on the aircraft;
• the temperature is provided by a temperature probe located on the aircraft;
• the angle of incidence is provided by an incidence probe (44) located on the aircraft.

16. The deforming process according to any one of claims 1 to 11, **characterised in that** it is applicable to the blades of a wind turbine.

17. The deforming process according to any one of claims 1 to 10, **characterised in that** it is applicable to an aerodynamic profile immersed in water.

18. The deforming process according to any one of claims 1 to 11 and 17, **characterised in that** it is applicable to the blades of a turbine.

19. The deforming process according to any one of claims 1 to 11 and 17, **characterised in that** it is applicable to an aerodynamic profile of a vessel.

20. The deforming process according to any one of claims 1 to 10, **characterised in that** it is applicable to an aerodynamic profile of a submarine.

21. The deforming process according to any one of the preceding claims, **characterised in that** it is applicable to the deformation of a flexible skin composed of Kevlar carbon, a trademark owned by the company Dupont de Nemours.

## Patentansprüche

1. Verfahren zum aktiven Verformen durch Regelung eines aerodynamischen Profils (1), das ein elastisches Material (3) umfasst, das auf einen Teil der Oberfläche des aerodynamischen Profils aufgebracht wird, wobei das elastische Material mit einem Fluidstrom (7) in Kontakt ist, wobei das elastische Material von einem oder mehreren mit dem plastischen Material in Kontakt gebrachten Formgedächtnisaktuatoren (4) verformt werden kann, wobei die Aktuatoren von einem mit Sensoren (8) verbundenen Rechner (5) gesteuert werden,
**dadurch gekennzeichnet, dass** es wenigstens die folgenden Schritte beinhaltet:
• Messen der physikalischen Variablen des Fluidströmungszustands mittels der Sensoren (8);
• Übertragen der physikalischen Variablen des gemessenen Strömungszustands zu dem Rechner (5);
• Erkennen eventueller Übergangspunkte (39) zwischen einem laminaren Fluss und einem turbulenten Fluss des Fluids auf dem elastischen Material in Abhängigkeit von den physikalischen Variablen gemessener Strömungszustände;
• Berechnen einer auf das elastische Material anzuwendenden Verformung in Abhängigkeit von Positionen der erkannten Übergangspunkte;
• Berechnen eines oder mehrerer Sollwerte, die von einem oder mehreren Aktuatoren anzuwenden sind, um die auf das elastische Material anzuwendende Verformung zu erhalten;
• Übertragen des berechneten Sollwerts zu den Aktuatoren;
• Verformen des elastischen Materials durch die Aktuatoren;
• Messen der effektiven Verformung des elastischen Materials;
• Berechnen eines neuen durch ein oder mehrere Aktuatoren anzuwendenden Sollwerts in Abhängigkeit von der effektiven Verformung des elastischen Materials.

2. Verformungsverfahren nach Anspruch 1, **dadurch gekennzeichnet, dass** die Erkennung von Übergangspunkten (39) Folgendes beinhaltet:
• eine erste Berechnung (45) des Viskositätskoeffizienten des Fluids;
• eine zweite Berechnung (46) der für den Fluidstrom über das elastische Material charakteristischen Reynolds-Zahl;
• eine dritte Berechnung (47) der Positionen eventueller Übergangspunkte unter Berücksichtigung der Reynolds-Zahl, des Viskositätskoeffizienten des Fluids, eines Einfallswinkels des Profils in dem Fluid in Bezug auf eine horizontale Ebene, einer Strömungsgeschwindigkeit des Fluids, aus einer Datenbank kommender dynamischer Berechnungsdaten des Fluids.

3. Verformungsverfahren nach Anspruch 2, **dadurch gekennzeichnet, dass** die dritte Berechnung von Positionen der Übergangspunkte (39) Druckkoeffizienten von Sensoren (8) auf Faseroptikbasis auf der Oberfläche des elastischen Materials (3) berücksichtigt.

4. Verformungsverfahren nach Anspruch 2, **dadurch gekennzeichnet, dass** die dritte Berechnung von Positionen der Übergangspunkte Druckkoeffizienten der Sensoren auf Faseroptikbasis in dem elastischen Material berücksichtigt.

5. Verformungsverfahren nach einem der Ansprüche 3 bis 4, **dadurch gekennzeichnet, dass** die Druckkoeffizienten Koeffizienten in Bezug auf einen Druck- und einen Bezugstemperaturkoeffizienten sind, gemessen anhand einer unter dem elastischen Material liegenden Bezugsfaseroptik.

6. Verformungsverfahren nach einem der vorherigen Ansprüche, **dadurch gekennzeichnet, dass** die Berechnung einer anzuwendenden Verformung die Form des Profils und die physikalischen Kennwerte des elastischen Materials berücksichtigt.

7. Verformungsverfahren nach einem der vorherigen Ansprüche, **dadurch gekennzeichnet, dass** die Berechnung der Sollwerte die mechanischen Kennwerte der Aktuatoren und die physikalischen Kennwerte des elastischen Materials berücksichtigt.

8. Verformungsverfahren nach einem der vorherigen Ansprüche, **dadurch gekennzeichnet, dass** es auf die Verformung eines elastischen Materials angewendet wird, das nach der Verformung seine Anfangsform wieder einnehmen kann.

9. Verformungsverfahren nach einem der vorherigen Ansprüche, **dadurch gekennzeichnet, dass** es Aktuatoren aus einer Formgedächtnislegierung implementiert.

10. Verformungsverfahren nach einem der vorherigen Ansprüche, **dadurch gekennzeichnet, dass** es Aktuatoren (4, 22, 23, 24, 25) implementiert, die über ein oder mehrere Aktuatorreihen verteilt sind, wobei die Aktuatorreihen unter dem elastischen Material verteilt sind.

11. Verformungsverfahren nach einem der vorherigen Ansprüche, **dadurch gekennzeichnet, dass** es auf ein aerodynamisches Profil in Kontakt mit Luft anwendbar ist.

12. Verformungsverfahren nach einem der vorherigen Ansprüche, **dadurch gekennzeichnet, dass** es auf ein Tragflächenprofil eines Luftfahrzeugs (1) anwendbar ist.

13. Verformungsverfahren nach dem vorherigen Anspruch, **dadurch gekennzeichnet, dass** es Aktuatoren (4, 22, 23, 24, 25) implementiert, die über Aktuatorreihen verteilt sind, die im Wesentlichen parallel zu einer Vorderkante des Tragflächenprofils sind.

14. Verformungsverfahren nach einem der Ansprüche 12 und 13, **dadurch gekennzeichnet, dass** die Berechnung der Reynolds-Zahl die Strömungsgeschwindigkeit des Fluids, die Höhe des Luftfahrzeugs und den Viskositätskoeffizienten des Fluids berücksichtigt.

15. Verformungsverfahren nach einem der Ansprüche 12 bis 14, **dadurch gekennzeichnet, dass**:
• die Strömungsgeschwindigkeit des Fluids von einem an dem Luftfahrzeug befindlichen Luftgeschwindigkeitsindikator (41) angegeben wird;
• die Höhe von einem an dem Luftfahrzeug befindlichen Höhenmesser angegeben wird;
• die Temperatur von einer an dem Luftfahrzeug befindlichen Temperatursonde angegeben wird;
• der Einfallswinkel von einer an dem Luftfahrzeug befindlichen Einfallssonde (44) angegeben wird.

16. Verformungsverfahren nach einem der Ansprüche 1 bis 11, **dadurch gekennzeichnet, dass** es auf die Blätter einer Windturbine anwendbar ist.

17. Verformungsverfahren nach einem der Ansprüche 1 bis 10, **dadurch gekennzeichnet, dass** es auf ein in Wasser eingetauchtes aerodynamisches Profil anwendbar ist.

18. Verformungsverfahren nach einem der Ansprüche 1 bis 11 und 17, **dadurch gekennzeichnet, dass** es auf die Blätter einer Turbine anwendbar ist.

19. Verformungsverfahren nach einem der Ansprüche 1 bis 11 und 17, **dadurch gekennzeichnet, dass** es auf ein aerodynamisches Profil eines Schiffs anwendbar ist.

20. Verformungsverfahren nach einem der Ansprüche 1 bis 10, **dadurch gekennzeichnet, dass** es auf ein aerodynamisches Profil eines U-Boots anwendbar ist.

21. Verformungsverfahren nach einem der vorherigen Ansprüche, **dadurch gekennzeichnet, dass** es auf die Verformung einer flexiblen Haut aus Kevlar-Kohlenstoff anwendbar ist, einer Handelsmarke im Besitz der Firma Dupont de Nemours.
